(19) Europäisches Patentamt
European Patent Office
Office européen des brevets

(11) Veröffentlichungsnummer: **0 143 265**
**A1**

# (12) EUROPÄISCHE PATENTANMELDUNG

(21) Anmeldenummer: **84111643.7**

(51) Int. Cl.[4]: **G 21 F 9/02**

(22) Anmeldetag: **28.09.84**

(30) Priorität: **13.10.83 DE 3337338**

(43) Veröffentlichungstag der Anmeldung: **05.06.85 Patentblatt 85/23**

(84) Benannte Vertragsstaaten: **AT BE CH DE FR GB IT LI LU NL SE**

(71) Anmelder: **Technischer überwachungs-Verein Bayern e.V., Westendstrasse 199, D-8000 München 21 (DE)**

(72) Erfinder: **Bekk, Peter, Dr. Dipl.-Chem., Kaspar-Kerll-Strasse 43, D-8000 München 60 (DE)**
Erfinder: **Kaller, Paul, Dipl.-Chem., Leuchtenbergring 10, D-8000 München 80 (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

## (54) Verfahren zum Prüfen von Schwebstoffiltern.

(57) Die Erfindung beschreibt ein Verfahren zum Prüfen von Schwebstoffiltern unter Verwendung eines mit einem radioaktiven Isotop markierten, festen Aerosols, das dadurch gekennzeichnet ist, daß man ein radioaktives Jodisotop in Form von elementarem Jod und/oder Jodverbindungen, adsorbiert an einer polymeren, Zwischenschichtmoleküle oder -ionen enthaltenden Schichtverbindung, die gegebenenfalls Interkallationskomplexe mit dem elementaren Jod oder den Jodverbindungen zu bilden vermag, verwendet.

Die Erfindung beschreibt ebenso ein Prüfpräparat zum Prüfen von Schwebstoffiltern, enthaltend ein mit einem radioaktiven Isotop markiertes, festes Aerosol, das dadurch gekennzeichnet ist, daß es ein Jodisotop in Form von elementarem Jod und/oder Jodverbindungen, adsorbiert an einer polymeren, Zwischenschichtmoleküle oder -ionen enthaltenden Schichtverbindung, die gegebenenfalls Interkallationskomplexe mit dem elementaren Jod oder den Jodverbindungen zu bilden vermag, enthält.

EP 0 143 265 A1

## Beschreibung

Die Erfindung betrifft ein Verfahren zum Prüfen von Schwebstoffiltern unter Verwendung eines mit einem radioaktiven Isotop markierten, festen Aerosols.

In bestimmten technischen Anlagen werden für verschiedene Zwecke Schwebstoffilter zum Abscheiden von Schwebstoffen, wie beispielsweise radioaktive Stäube, Nebel, Bakterien oder Viren, aus Luft und anderen Gasen eingesetzt. Die in der sogenannten Reinraumtechnik verwendeten Staubfilter seien ebenfalls erwähnt. Ein wichtiges Anwendungsgebiet von Schwebstoffiltern liegt im Bereich der kerntechnischen Anlagen.

Verfahren zum Prüfen von Schwebstoffiltern werden zur Typeneinteilung, zum Nachweis der Leckfreiheit und auch zur wiederkehrenden Prüfung der Schwebstoffilter benötigt.

Die Typprüfung von bestimmten Schwebstoffiltern, die sich auch zur Verwendung in kerntechnischen Anlagen eignen, wird beispielsweise in der DIN 24 184 vom Oktober 1974 beschrieben. Die Typprüfung der Schwebstoffilter nach dieser Norm erfolgt mit Hilfe von drei Prüfaerosolen 1,2 und 3. Prüfaerosol 1 ist Paraffinölnebel, der aus Teilchendurchmessern kleiner als 1 µm und größtem Teilchenanteil mit Durchmessern zwischen 0,3 und 0,5 µm besteht. Hierbei wird das sich in einem Vernebelungsgefäß befindende Öl mit einer Heizvorrichtung auf einer Temperatur von 100°C gehalten. Dann wird in das Vernebelungsgefäß gefilterte Druckluft eingeblasen. Das austretende Gemisch aus Luft, Öldampf und Ölnebel wird in ein Mischgefäß geleitet, in dem das Gemisch mit entspannter kalter Druckluft verdünnt wird. Dabei kondensiert der Dampf. Die entstehenden Aerosole bilden den Nebel. Der so gebildete, aus dem Nebelentwickler austretende Nebel wird dann der Meßanlage zugeführt. Zur Bestimmung des

Durchlaßgrades werden die Konzentrationen des Prüfaerosols 1 roh- und reinluftseitig zum Schwebstoffilter als Intensität des gestreuten Lichtes gemessen. Prüfaerosol 2 ist ein natürliches atmosphärisches Aerosol, das durch Thorium B radioaktiv indiziert wird. Die Teilchen haben einen größten Durchmesser von 0,3 µm und einen größten Teilchenanteil mit Durchmessern zwischen 0,05 und 0,08 µm. Zur Herstellung wird atmosphärische Luft mit dem in ihr enthaltenden natürlichen Aerosol (ggf. getrocknet und vorgefilter) über ein hochemanierendes Radiothorpräparat (Th 228) geleitet. Das Gemisch aus Luft, kleinen Teilchen und Thoron bleibt dann mindestens 10 Minuten lang sich selbst überlassen, damit das Thoron im wesentlichen zu Th-B zerfallen kann, das die Teilchen durch Anlagerung radioaktiv markiert.
Erst nach dieser Zeit darf das Prüfaerosol dem Luftstrom zugemischt werden, mit dem die Prüfung durchgeführt wird. Zur Bestimmung des Durchlaßgrades werden die Konzentrationen des Prüfaerosols 2 roh- und reinluftseitig zum Schwebstoffilter, direkt oder indirekt als Radioaktivität gemessen.
Prüfaerosol 3 ist in einer Mühle gemahlener, frisch erzeugter Quarzstaub. Zur Herstellung wird Quarzsand in einer Mühle so vermahlen, und anschließend so gesichtet, daß eine bestimmte Teilchenzahlverteilung vorliegt. Die Bestimmung des Durchlaßgrades erfolgt mittels der beim Prüfaerosol 1 beschriebenen Methode. Gemäß dieser Norm werden die Schwebstoffilter je nach Durchlaßgrad gegenüber den einzelnen Prüfaerosolen in Schwebstoffklassen Q, R bzw. S eingeteilt.

Ein weiteres Prüfverfahren erfolgt mit Hilfe eines Prüfaerosols, das aus einer Lösung von Uranin (Natriumderivat von Fluorescein) gebildet wird. Die Bestimmung des Durchlaßgrades erfolgt durch Konzentrationsmessung des Prüfaerosols roh- und reinluftseitig zum Schwebstoffilter mittels eines Fluoreszenzspektrometers.

Weiterhin ist schließlich ein Prüfverfahren bekannt, bei dem ein Prüfaerosol, das aus einer Lösung von Bariumnitrat, welches mit $^{139}Ba$ getracert ist, gebildet wird. Die Bestimmung des Durchlaßgrades erfolgt hierbei durch Messung der Konzentrationen des Prüfaerosols roh- und reinluftseitig zum Schwebstoffilter über die Radioaktivität.

Die oben beschriebenen Verfahren zum Prüfen von Schwebstofffiltern besitzen jedoch folgende Nachteile.

Das Prüfverfahren gemäß DIN 24 184 stellt lediglich eine Typprüfung im Labor dar und eignet sich nicht für wiederkehrende Prüfungen während des Betriebs der Schwebstoffilter, beispielsweise in einer kerntechnischen Anlage.

Die Uraninprüfung ist darin nachteilig, daß oxidierend wirkende Schadstoffe, beispielsweise Stickoxide, das Prüfmittel Uranin zerstören und somit eine eindeutige Prüfung verhindert, bzw. zumindest erheblich beeinträchtigt wird. Da das Uranin enthaltende Prüfaerosol aus einer Lösung in die Rohluftseite des Schwebstoffilters eingesprüht wird, ist es schwierig eine genau definierbare Partikelgrößenverteilung zu erhalten. Weiterhin kann diese Prüfung nur mit einer relativ geringen Nachweisempfindlichkeit bzw. mit einem hohen zeitlichen Aufwand durchgeführt werden. Schließlich ist die Prüfung mit einem, beispielsweise für kerntechnische Anlagen nicht üblichen, apparativen Aufwand verbunden.

Bei der Bariumnitrat-Prüfung unter Verwendung von $^{139}Ba$ besteht eine hohe radiologische Belastung bzw. Gefahrenpotential des Prüfpersonals, verbunden mit einem entsprechend hohen Aufwand an Abschirmmaßnahmen. Da das Bariumnitrat enthaltende Prüfaerosol aus einer Lösung eingesprüht wird, ist es auch hier schwierig, eine genau definierbare Partikelgrößenverteilung zu erhalten.

Aufgabe der vorliegenden Erfindung war es deshalb, ein neues Verfahren zum Prüfen von Schwebstoffiltern zur Verfügung zu stellen, das die oben genannten Nachteile der zur Zeit eingesetzten Verfahren überwindet, das sich zur wiederkehrenden Vor Ort-Prüfung in einer technischen Anlage eignet und bei dem sich insbesondere der Durchlaßgrad des Schwebstoffilters mit großer Genauigkeit bestimmen läßt.

Diese Aufgabe wird erfindungsgemäß durch ein Verfahren der eingangs genannten Art dadurch gelöst, daß man ein radioaktives Jodisotop in Form von elementarem Jod und/oder Jodverbindungen, adsorbiert an einer polymeren, Zwischenschichtmoleküle oder -ionen enthaltenden Schichtverbindung, die gegebenenfalls Interkallationskomplexe mit dem elementaren Jod oder den Jodverbindungen zu bilden vermag, verwendet.

Bei dem erfindungsgemäßen Verfahren erfolgt die Prüfung mit Hilfe eines festen Aerosols, das aus der mit dem radioaktiven Jodisotop markierten, polymeren Schichtverbindung, wie oben erwähnt, besteht. Zur Herstellung des Prüfaerosols wird die polymere Schichtverbindung zu Staub vermahlen und anschließend so gesichtet, daß je nach Schwebstoffilterklasse des zu prüfenden Schwebstoffilters die gewünschte Teilchengrößenverteilung erhalten wird. Hierbei lassen sich beispielsweise Teilchendurchmesser kleiner 1 µm herstellen. Der auf eine gewünschte Teilchengröße gesichtete Staub wird dann mit einem radioaktiven Jodisotop in Form von elementarem Jod oder Jodverbindungen beladen und in dieser Form zum Prüfen verwendet.

Das erfindungsgemäße Verfahren eignet sich zur Typprüfung, zum Nachweis der Leckfreiheit und auch zur wiederkehrenden Prüfung der Schwebstoffilter vor Ort.

Bevorzugt setzt man als polymere Schichtverbindung ein Schichtsilikat mit anorganischen und/oder organischen Zwischenschichtkationen, das mit dem elementaren Jod oder den Jodverbindungen einen Interkallationskomplex bildet, ein. Hierfür geeignete Schichtsilikate kommen als natürliche Tonminerale vor. Insbesondere ist es bevorzugt, daß man als Interkallationskomplex ein Onium-Schichtsilikat einsetzt. Als Onium-Ionen kommen beispielsweise solche von Elementen der V. und VI. Hauptgruppe des Periodensystems in Frage, wie etwa Ammonium, Phosphonium, Stibonium und dgl.. Als Interkallationskomplexe von Onium-Schichtsilikaten eignen sich ganz besonders Interkallationskomplexe von Onium-Montmorilloniten.

Bei einer bevorzugten Ausführungsform des erfindungsgemäßen Verfahrens setzt man einen Interkallationskomplex ein, der als Zwischenschichtkationen $H\cdot aq.^{+}$- und/oder $NR_4^{+}$-Ionen enthält, wobei R eine substituierte oder unsubstituierte, verzweigt- oder geradkettige Alkylgruppe mit beispielsweise 1 bis 20 Kohlenstoffatomen, eine substituierte oder unsubstituierte, verzweigt- oder geradkettige Hydroxyalkylgruppe mit beispielsweise 1 bis 20 Kohlenstoffatomen oder eine substituierte oder unsubstituierte, verzweigt- oder geradkettige Alkoxygruppe mit beispielsweise 1 bis 20 Kohlenstoffatomen bedeutet, und wobei die Reste R gleich oder voneinander verschieden sein können. Eine besonders geeignete Gruppe von Substituenten für die Reste R sind hierbei Polyalkylenglykol-, insbesondere Polyethylenglykolreste.

Als Montmorillonite, die beim erfindungsgemäßen Verfahren bevorzugt eingesetzt werden, eignen sich beispielsweise solche der folgenden Formel:

$$Me^{2+}_{0,15}\left[Al_{1,70-x}Fe_xMg_{0,30}(OH)_2\right]Si_4O_{10}$$

als Zwischenschichtkationen können Calcium-Ionen vorliegen; x für den Eisengehalt liegt unter 0,30.

Durch Kationenaustausch werden aus solchen Montmorilloniten Onium-Montmorillonite hergestellt, wobei beispielsweise folgende Kationen (als Ammoniumchloride vorliegend) verwendet werden können:

(1) N-(n-Hexadecyl)-N,N,N-trimethyl-ammonium

(2) N-(Polyethylenglykol)$_x$-N-(polyethylenglykol)$_y$-N-(n-alkyl)-N-methyl-ammonium;
$x + y = 5$

bei der n-Alkylgruppe handelt es sich um ein Gemisch mit folgender Zusammensetzung:

n-Dodecyl, $C_{12}H_{25}$ ca. 5 %,
n-Tetradecyl, $C_{14}H_{29}$ ca. 5 %,
n-Hexadecyl, $C_{16}H_{33}$ ca. 25 %,
n-Octadecyl, $C_{18}H_{37}$ ca. 65 %

(3) N-(Polyethylenglykol)$_x$-N-(polyethylenglykol)$_y$-N-(n-alkyl)-N-methyl-ammonium;
$x + y = 15$

bei der n-Alkylgruppe handelt es sich um ein Gemisch mit folgender Zusammensetzung:

n-Octyl, $C_8H_{17}$ ca. 7 %,
n-Decyl, $C_{10}H_{21}$ ca. 6 %,
n-Dodecyl, $C_{12}H_{25}$ ca. 51 %,
n-Tetradecyl, $C_{14}H_{29}$ ca. 19 %,
n-Hexadecyl, $C_{16}H_{33}$ ca. 8 %, und
n-Octadecyl, $C_{18}H_{37}$ ca. 9 %.

(4) N,N-di-(n-Alkyl)-N-(2-hydroxy-n-propyl)-N-methyl-ammonium

bei der n-Alkylgruppe handelt es sich um ein Gemisch aus:

n-Tetradecyl, $C_{14}H_{29}$ ca. 5 %,
n-Hexadecyl, $C_{16}H_{33}$ ca. 25 %, und

n-Octadecyl, $C_{18}H_{37}$ ca. 65 %.

(5) N-(t-Butyl)-N,N-di-(2-hydroxyethyl)-ammonium

(6) N-(n-Octadecyl)-N-(2-hydroxyethyl)-N,N-dimethyl-ammonium

Die Adsorption eines radioaktiven Jodisotops an, beispielsweise unter Verwendung der Kationen (1) bis (6) hergestellten Onium-Montmorilloniten kann sowohl in Form von elementarem Jod als auch in Form von Jodverbindungen erfolgen. Als Jodverbindungen eignen sich insbesondere Alkyljodide, wie Methyl- oder Ethyljodid.

Bei einer besonders bevorzugten Ausführungsform des erfindungsgemäßen Verfahrens wird als radioaktives Jodisotop $^{123}J$ verwendet. Das erfindungsgemäße Verfahren ist mit einer Reihe von Vorteilen verbunden. Das beim erfindungsgemäßen Verfahren eingesetzte Aerosol ist gegenüber einer Vielzahl von Schadstoffen, beispielsweise Lösungsmittel oder Stickoxide, nicht empfindlich. Es läßt sich immer durch Vermahlen und Sichten eine definierte Teilchengrößenverteilung herstellen. Dies ist jedoch bei den bekannten Verfahren, die mit flüssigen Aerosolen arbeiten, mit ziemlichen Schwierigkeiten verbunden. Nach dem erfindungsgemäßen Verfahren kann ein kurzlebiges Jodisotop, beispielsweise $^{123}J$, verwendet werden, wobei die radiologische Gefährdung des Prüfpersonals nur sehr gering ist. $^{123}J$ wird beispielsweise auch für pharmazeutische Zwecke und medizinische Untersuchungen, bei denen radioaktive Substanzen erforderlich sind, bevorzugt verwendet. Weiterhin wird der Abscheidegrad des geprüften Filters bei der Prüfung nicht beeinträchtigt, da aufgrund der hohen Nachweisempfindlichkeit beim erfindungsgemäßen Verfahren nur sehr geringe Prüfmittelmengen benötigt werden. Ein weiterer Vorteil besteht schließlich darin, daß sich das adsorbierte Jodisotop erst bei relativ hohen Temperaturen freisetzen kann. Wird das radioaktive Jodisotop beispielsweise an einem Onium-Montmorillonit adsorbiert, der beispielsweise unter Verwendung der oben genannten Kationen (1) bis (6) durch Kationenaustauschreaktion hergestellt wurde, so liegen die Freisetzungstemperaturen für das adsorbierte Jod durchwegs oberhalb 200°C. Dadurch ist gewährleistet, daß das adsorbierte Jod während dem gesamten Zeitraum der Prüfung sich nicht von dem Aerosol freisetzt. Nach dem erfindungsgemäßen Verfahren läßt sich somit der Durchlaß- bzw. Abscheidegrad des zu prüfenden Schwebstofffilters eindeutig und mit großer Genauigkeit bestimmen.

Gegenstand der vorliegenden Erfindung ist ebenso ein Prüfpräparat zum Prüfen von Schwebstoffiltern, enthaltend ein mit einem radioaktiven Isotop markiertes, festes Aerosol, das dadurch gekennzeichnet ist, daß es ein radioaktives Josisotop in Form von elementarem Jod und/oder Jodverbindungen, adsorbiert an einer polymeren, Zwischenschichtmoleküle oder -ionen enthaltenden Schichtverbindung, die gegebenenfalls Interkallationskomplexe mit dem elementaren Jod oder den Jodverbindungen zu bilden vermag, enthält.

Bevorzugt enthält das Prüfpräparat als polymere Schichtverbindung ein Schichtsilikat mit anorganischen und/oder organischen Zwischenschichtkationen, das mit dem elementaren Jod oder den Jodverbindungen einen Interkallationskomplex bildet. Insbesondere ist es bevorzugt, daß es als Interkallationskomplex ein Onium-Schichtsilikat, am meisten bevorzugt einen Onium-Montmorillonit, enthält.

Bei einer bevorzugten Ausführungsform enthält es einen Interkallationskomplex, der als Zwischenschichtkationen $H \cdot aq.^+$- und/oder $NR_4^+$- Ionen enthält, wobei R eine substituierte oder unsubstituierte, verzweigt- oder geradkettige Alkylgruppe mit beispielsweise 1 bis 20 Kohlenstoffatomen, eine substituierte oder unsubstituierte, verzweigt- oder

geradkettige Hydroxyalkylgruppe mit beispielsweise 1 bis 20 Kohlenstoffatomen oder eine substituierte oder unsubstituierte, verzweigt- oder geradkettige Alkoxygruppe mit beispielsweise 1 bis 20 Kohlenstoffatomen bedeutet, und wobei die Reste R gleich oder voneinander verschieden sein können. Eine besonders geeignete Gruppe von Substituenten für die Reste R sind hierbei Polyalkylenglykol-, insbesondere Polyethylenglykolreste.

Ein erfindungsgemäß besonders bevorzugtes Prüfpräparat enthält als radioaktives Jodisotop $^{123}J$ in Form von elementarem Jod oder Jodverbindungen.

Das erfindungsgemäße Verfahren wird anhand der beiliegenden Zeichnung, die ein vereinfachtes Fließdiagramm einer Schwebstoffilterprüfung zeigt, näher erläutert.

In der Zeichnung ist das zu prüfende Schwebstoffilter mit 1 bezeichnet. Die Durchführung der Prüfung erfolgt wie nachstehend beschrieben.

Über den rohluftseitigen Probenahmebehälter 2 bzw. reinluftseitigen Probenahmebehälter 3 werden mittels der Pumpen 4 und 5 definierte Luftvolumenströme geleitet, um die Meßvorrichtung für die Prüfung vorzubereiten. Die Durchflußmeßgeräte 6 und 7 dienen zur Justierung der Volumenströme; die Gasuhren 8 und 9 zur integralen Messung des Volumendurchsatzes. Nach erfolgter Justierung der Meßvorrichtung wird aus dem Probeaufgabebehälter 10, in dem sich das Prüfpräparat befindet, durch Druckluft als Trägergas eine definierte Menge des Prüfaerosols in den rohluftseitigen Kanal des Schwebstoffilters eingeblasen. Die Sammlung von Probenahmeströmen über die Probenahmebehälter 2 und 3 erfolgt über einen definierten Zeitraum. Die Konzentrationen der in den Probenahmegefäßen 2 und 3 gesammelten Aerosolmengen werden danach durch Messung der Radioaktivität des eingesetzten radioaktiven Jodisotops,

beispielsweise $^{123}J$, bestimmt. Das Verhältnis der Konzentrationen des radioaktiven Jodisotops in dem rohluftseitigen und dem reinluftseitigen Probenahmegefäß bestimmt den Durchlaß- bzw. Abscheidegrad des zu prüfenden Schwebstoffilters.

GRÜNECKER, KINKELDEY, STOCKMAIR & PARTNER

PATENTANWÄLTE
EUROPEAN PATENT ATTORNEYS

A. GRÜNECKER, DIPL.-ING.
DR. H. KINKELDEY, DIPL.-ING.
DR. W. STOCKMAIR, DIPL.-ING., AE E (CALTECH)
DR. K. SCHUMANN, DIPL.-PHYS.
P. H. JAKOB, DIPL.-ING.
DR. G. BEZOLD, DIPL.-CHEM.
W. MEISTER, DIPL.-ING.
H. HILGERS, DIPL.-ING.
DR. H. MEYER-PLATH, DIPL.-ING.

8000 MÜNCHEN 22
MAXIMILIANSTRASSE 43

Anmelder:

Technischer Überwachungs-Verein Bayern e.V.
Westendstrasse 199
8000 München 21

28. September 1984
EP 2001-60/co

## Verfahren zum Prüfen von Schwebstoffiltern

### Patentansprüche

1. Verfahren zum Prüfen von Schwebstoffiltern unter Verwendung eines mit einem radioaktiven Isotop markierten, festen Aerosols, dadurch gekennzeichnet, daß man ein radioaktives Jodisotop in Form von elementarem Jod und/oder Jodverbindungen, adsorbiert an einer polymeren, Zwischenschichtmoleküle oder -ionen enthaltenden Schichtverbindung, die gegebenenfalls Interkallationskomplexe mit dem elementaren Jod oder den Jodverbindungen zu bilden vermag, verwendet.

2. Verfahren nach Anspruch 1, dadurch gekennzeichnet, daß man als polymere Schichtverbindung einen Interkallationskomplex eines Schichtsilikates mit anorganischen und/oder organischen Zwischenschichtkationen einsetzt.

3. Verfahren nach Anspruch 1 und/oder 2, dadurch g e k e n n z e i c h n e t , daß man als Interkallationskomplex ein Onium-Schichtsilikat einsetzt.

4. Verfahren nach Anspruch 3, dadurch g e k e n n z e i c h n e t , daß man als Interkallationskomplex einen Onium-Montmorillonit einsetzt.

5. Verfahren nach mindestens einem der vorangehenden Ansprüche, dadurch g e k e n n z e i c h n e t , daß man einen Interkallationskomplex einsetzt, der als Zwischenschichtkationen $H \cdot aq.^{+}$- und/oder $NR_4^{+}$-Ionen enthält, wobei R eine substituierte oder unsubstituierte, verzweigt- oder geradkettige Alkyl-, substituierte oder unsubstituierte, verzweigt- oder geradkettige Hydroxyalkyl- oder substituierte oder unsubstituierte, verzweigt- oder geradkettige Alkoxygruppe bedeutet und wobei die Reste R gleich oder verschieden voneinander sein können.

6. Verfahren nach mindestens einem der vorangehenden Ansprüche, dadurch g e k e n n z e i c h n e t , daß man als radioaktives Jodisotop $^{123}J$ verwendet.

7. Prüfpräparat zum Prüfen von Schwebstoffiltern, enthaltend ein mit einem radioaktiven Isotop markiertes, festes Aerosol, dadurch g e k e n n z e i c h n e t , daß es ein radioaktives Jodisotop in Form von elementarem Jod und/oder Jodverbindungen, adsorbiert an einer polymeren, Zwischenschichtmoleküle oder -ionen enthaltenden Schichtverbindung, die gegebenenfalls Interkallationskomplexe mit dem elementaren Jod oder den Jodverbindungen zu bilden vermag, enthält.

8. Prüfpräparat nach Anspruch 7, dadurch g e k e n n z e i c h n e t, daß es als polymere Schichtverbindung einen Interkallationskomplex eines Schichtsilikates mit anorganischen und/oder organischen Zwischenschichtkationen

0143265

enthält.

9. Prüfpräparat nach Anspruch 7 und/oder 8, dadurch gekennzeichnet, daß es als Interkallationskomplex ein Onium-Schichtsilikat enthält.

10. Prüfpräparat nach Anspruch 9, dadurch gekennzeichnet, daß es als Interkallationskomplex einen Onium-Montmorillonit enthält.

11. Prüfpräparat nach mindestens einem der Ansprüche 7 bis 10, dadurch gekennzeichnet, daß es einen Interkallationskomplex enthält, der als Zwischenschichtkationen $H \cdot aq.^{+}$- und/oder $NR_4^{+}$-Ionen enthält, wobei R eine substituierte oder unsubstituierte, verzweigt- oder geradkettige Alkyl-, substituierte oder unsubstituierte, verzweigt- oder geradkettige Hydroxyalkyl- oder substituierte oder unsubstituierte, verzweigt- oder geradkettige Alkoxygruppe bedeutet und wobei die Reste R gleich oder verschieden voneinander sein können.

12. Prüfpräparat nach mindestens einem der Ansprüche 7 bis 11, dadurch gekennzeichnet, daß es als radioaktives Jodisotop $^{123}J$ enthält.

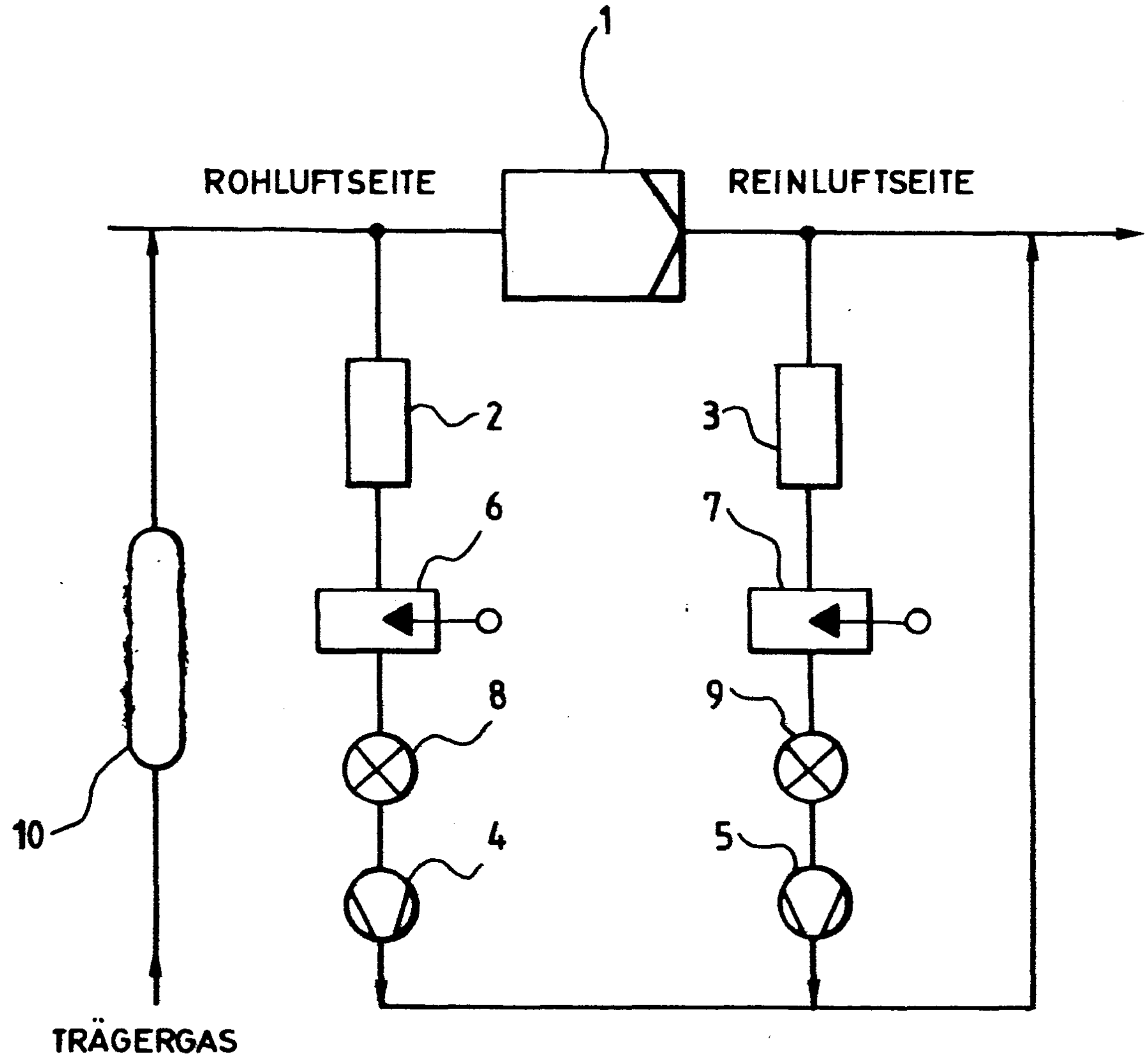
1
ROHLUFTSEITE
REINLUFTSEITE
2
3
6
7
8
9
10
4
5
TRÄGERGAS

Europäisches Patentamt

# EUROPÄISCHER RECHERCHENBERICHT

0143265
Nummer der Anmeldung

EP 84 11 1643

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | "Treatment of airborne radioactive wastes", PROCEEDINGS OF A SYMPOSIUM ON OPERATING AND DEVELOPMENTAL EXPERIENCE IN THE TREATMENT OF AIRBORNE RADIOACTIVE WASTES HELD BY THE INTERNATIONAL ATOMIC ENERGY AGENCY, 26.-30. August 1968, New York, US, Seiten 265-275, International Atomic Energy Agency, Wien , AT; J.D. DEFIELD et al.: "Efficiency testing of the air cleaning system for a high temperature reactor" * Seiten 270,274 * | 1 | G 21 F 9/02 |
| | --- | | |
| A | FR-A-1 242 913 (NATIONAL LEAD CO.) * Zusammenfassung, Punkte 1,2,3 * | 1,2,3, 4,5,8, 9,10 | |
| | --- | | RECHERCHIERTE SACHGEBIETE (Int. Cl.4) |
| A | FR-A-1 235 460 (THE GAS COUNCIL) | | G 21 F<br>B 01 J<br>B 01 D |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 14-12-1984 | NICOLAS H.J.F. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument